# EUROPÄISCHE PATENTANMELDUNG

(11) **EP 4 173 462 A1**
(43) Veröffentlichungstag der Anmeldung: **03.05.2023**
(21) Anmeldenummer: 22401028.0
(22) Anmeldetag: 17.10.2022
(51) Int. Cl.: A01C 7/04, A01C 7/08

(54) **STROMLOS BETREIBBARE KONDITIONIERVORRICHTUNG FÜR EIN PNEUMATISCHES FÖRDERSYSTEM EINER LANDWIRTSCHAFTLICHEN AUSBRINGMASCHINE**

(30) Priorität: 27.10.2021 DE 102021127899
(71) Anmelder: Amazonen-Werke H. Dreyer SE & Co. KG, 49205 Hasbergen (DE)
(72) Erfinder: Johannaber, Stefan Jan, 49536 Lienen (DE); Wien, Thomas, 28816 Stuhr (DE); Hilbert, Florenz, 48282 Emsdetten (DE); Lübben, Jan-Eike, 26188 Edewecht (DE); Breuer, Jan Henrik, 48231 Warendorf (DE)

(57) **Zusammenfassung**

Die Erfindung betrifft eine stromlos betreibbare Konditioniervorrichtung (32) für ein pneumatisches Fördersystem (10) einer landwirtschaftlichen Ausbringmaschine, mit einer Einlassöffnung (46), über welche eine mit körnigem Material (20) beladene Luftströmung (24) in die Konditioniervorrichtung (32) einleitbar ist, einer mit der Einlassöffnung (46) verbundenen Aufbereitungskammer (64) zum Aufbereiten der durch die Einlassöffnung (46) einströmenden mit körnigem Material (20) beladenen Luftströmung (24) und einer mit der Aufbereitungskammer (64) verbundenen Auslassöffnung (48), über welche die in der Aufbereitungskammer (64) aufbereitete mit körnigem Material (20) beladene Luftströmung (24) aus der Konditioniervorrichtung (32) ausleitbar ist.

## Beschreibung

Die Erfindung betrifft eine stromlos betreibbare Konditioniervorrichtung nach dem Oberbegriff des Patentanspruchs 1 und ein pneumatisches Fördersystem für eine landwirtschaftliche Ausbringmaschine nach dem Oberbegriff des Patentanspruchs 10.

Pneumatische Fördersysteme von landwirtschaftlichen Ausbringmaschinen, wie beispielsweise Sämaschinen, weisen üblicherweise einen Strömungserzeuger auf, über welchen eine Luftströmung zum Transport von körnigem Material zu mehreren Materialablageeinrichtungen der landwirtschaftlichen Ausbringmaschine erzeugt wird. Die Materialverteilung innerhalb der Luftströmung soll dabei üblicherweise anwendungsspezifischen Erfordernissen genügen. Bei der Volumensaat soll die Verteilung des körnigen Materials innerhalb der Luftströmung möglichst gleichmäßig sein, sodass eine homogene Saatgutverteilung auf der landwirtschaftlichen Nutzfläche erreicht wird. Bei der Einzelkornsaat ist es erforderlich, die Körner vor Erreichen der Materialablageeinrichtung zu vereinzeln, sodass vereinzelte Saatkörner auf der landwirtschaftlichen Nutzfläche abgelegt werden.

Zur Kornvereinzelung werden üblicherweise elektromotorisch angetriebene Vereinzelungseinrichtungen eingesetzt. Eine dem Verteilerkopf nachgeschaltete motorisch angetriebene Vereinzelungseinrichtung ist beispielsweise aus der Druckschrift EP 3 284 332 A1 bekannt.

Der Einsatz von motorisch angetriebenen Einrichtungen zur Aufbereitung der mit körnigem Material beladenen Luftströmung ist jedoch mit einem erheblichen Aufwand verbunden, da an sämtlichen Ausbringleitungen der Ausbringmaschine elektrische Leistung für den Betrieb der zur Strömungsaufbereitung eingesetzten Einrichtung bereitgestellt werden muss. Hiermit geht ein enormer Verkabelungsaufwand einher. Darüber hinaus sind motorisch betriebene Einrichtungen zur Strömungsaufbereitung vergleichsweise kostenintensiv und weisen ein erhöhtes Ausfallrisiko auf. Ferner kann die Wartung und Reparatur entsprechender Einrichtungen zeit- und kostenaufwendig sein.

Darüber hinaus sind mechanisch angetriebene Dosiervorrichtungen bekannt, um Körner in dosierter Weise auszuleiten. Die Kopplung derartiger Dosiervorrichtungen an eine angetriebene Welle ist allerdings aufwändig und schränkt die Positionierung der Dosiervorrichtungen und deren Bewegungsfreiheit stark ein.

Die der Erfindung zugrundeliegende Aufgabe besteht somit darin, die Aufbereitung einer mit körnigem Material beladenen Luftströmung zu vereinfachen.

Die Aufgabe wird gelöst durch eine stromlos betreibbare Konditioniervorrichtung der eingangs genannten Art, wobei die erfindungsgemäße Konditioniervorrichtung eine mit der Einlassöffnung verbundene Aufbereitungskammer zum Aufbereiten der durch die Einlassöffnung einströmenden mit körnigem Material beladenen Luftströmung umfasst. Die erfindungsgemäße Konditioniervorrichtung weist ferner eine mit der Aufbereitungskammer verbundene Auslassöffnung auf, über welche die in der Aufbereitungskammer aufbereitete mit körnigem Material beladene Luftströmung aus der Konditioniervorrichtung ausleitbar ist.

Da die erfindungsmäße Konditioniervorrichtung stromlos betreibbar ist, entfällt eine aufwändige Verkabelung. Die stromlos betreibbare Konditioniervorrichtung kann dazu eingerichtet sein, ohne die Zuführung von externer Energie betrieben zu werden. Vorzugsweise ist die Konditioniervorrichtung betreibbar, ohne dass eine externe Antriebwelle mit der Konditioniervorrichtung zu koppeln ist, sodass auch ein umständlicher und zeitaufwändiger Anschluss an eine angetriebene Welle entfällt.

Durch die Aufbereitung der mit körnigem Material beladenen Luftströmung durch die Konditioniervorrichtung wird die Längsverteilung des Materials auf der landwirtschaftlichen Nutzfläche verbessert. Durch die verbesserte Längsverteilung kann beispielsweise eine vergleichmäßigte oder eine zyklische bzw. periodische Materialablage innerhalb einer Ausbringreihe umgesetzt werden. Das körnige Material kann beispielsweise Saatgut oder Dünger sein. Das körnige Material besteht aus Körnern. Die Körner können Saatkörner oder Düngerkörner sein. Der Strömungserzeuger kann beispielsweise ein Gebläse sein.

Die stromlos betreibbare Konditioniervorrichtung kann dazu eingerichtet sein, pneumatisch und/oder durch eine von einem Strömungserzeuger erzeugte Luftströmung betrieben oder angetrieben zu werden. Die Konditioniervorrichtung kann also eine aktive Konditioniervorrichtung sein, welche bewegliche Teile aufweist, wobei die Bewegung der beweglichen Teile durch den pneumatischen Antrieb bzw. durch die von dem Strömungserzeuger erzeugte Luftströmung verursacht wird. Die Aufbereitung der mit körnigem Material beladenen Luftströmung wird also pneumatisch und/oder durch eine von einem Strömungserzeuger erzeugte Luftströmung bewirkt. Die Konditioniervorrichtung kann dazu eingerichtet sein, durch die mit dem körnigem Material beladene Luftströmung angetrieben oder betrieben zu werden. Alternativ oder zusätzlich kann die Konditioniervorrichtung dazu eingerichtet sein, durch eine Luftströmung angetrieben zu werden, welche nicht mit körnigem Material beladen ist. Wenn die Konditioniervorrichtung durch die mit körnigem Material beladene Luftströmung angetrieben wird, kann die mit körnigem Material beladene Luftströmung beispielsweise ohne zwischengeschaltete Luftabscheidung auf die landwirtschaftliche Nutzfläche geführt werden.

In einer anderen bevorzugten Ausführungsform der erfindungsgemäßen Konditioniervorrichtung ist in der Aufbereitungskammer ein rotatorisch oder translatorisch antreibbares Konditionierorgan angeordnet, welches dazu eingerichtet ist, durch eine rotatorische oder translatorische Bewegung die durch die Einlassöffnung einströmende mit körnigem Material beladene Luftströmung aufzubereiten. Durch die Massenträgheit bzw. Rotationsträgheit des sich innerhalb der Aufbereitungskammer bewegenden körnigen Materials werden Kornanhäufungen innerhalb der Aufbereitungskammer durch die rotatorische oder translatorische Bewegung des Konditionierorgans geglättet. Einer Akkumulationsneigung der Körner, vergleichbar mit der Stauneigung im Verkehr bei lokalen Beeinträchtigungen des Verkehrsflusses, wird durch die rotatorische oder translatorische Bewegung des Konditionierorgans effektiv entgegengewirkt.

Das körnige Material wird durch das Konditionierorgan ist Zwangsbewegung versetzt. Auf diese Weise kann beispielsweise ein gleichmäßiger Korndurchsatz und/oder eine gleichmäßige Kornschichtdicke innerhalb der Konditioniervorrichtung erreicht werden. Das Konditionierorgan kann beispielsweise frei drehbar gelagert sein.

Das Konditionierorgan ist vorzugsweise dazu eingerichtet, mittels einer Luftströmung angetrieben zu werden. Das Konditionierorgan kann beispielsweise ein rotatorisch antreibbares Rad, beispielsweise ein Zellenrad, Schaufelrad, Turbinenrad oder Schraubenrad, oder eine rotatorisch antreibbare Scheibe, beispielsweise eine Vereinzelungsscheibe, sein. Ferner kann das Konditionierorgan auch ein Schwingungskörper sein, welcher durch schwingende Bewegungen eine Aufbereitung der mit körnigem Material beladenen Luftströmung, beispielsweise eine Vergleichmäßigung des körnigen Materials innerhalb der Luftströmung, herbeiführt. Die Konditioniervorrichtung kann auch mehrere antreibbare Konditionierorgane, beispielsweise zwei oder mehr als zwei Schwingungskörper umfassen. Die Schwingungskörper können beispielsweise Schwingungslamellen sein, wobei die Schwingungslamellen beispielsweise als Gummilappen ausgeführt sein können. Das eine oder die mehreren Konditionierorgane der Konditioniervorrichtung können ferner periodische oder zyklische Bewegungen, beispielsweise um eine Ruhelage herum, ausführen, wobei die zyklischen und/oder periodischen Bewegungen zu einer Aufbereitung der mit körnigem Material beladenen Luftströmung führt. Das eine oder die mehreren Konditionierorgane können über eine Bremse und/oder über einen schaltbaren Luftauslass für die zum Antrieb verwendete Luftströmung oder eine Luftumleitung der zum Antrieb verwendeten Luftströmung abgebremst und/oder gestoppt werden.

In einer anderen bevorzugten Ausführungsform der erfindungsgemäßen Konditioniervorrichtung ist das Konditionierorgan als Aufbereitungsrotor ausgebildet, welcher derart in der Aufbereitungskammer angeordnet ist, dass der Aufbereitungsrotor von der mit körnigem Material beladenen Luftströmung am radial äußeren Umfang angeströmt wird. Beispielsweise ist Aufbereitungsrotor derart in der Aufbereitungskammer angeordnet, dass der Aufbereitungsrotor von der mit körnigem Material beladenen Luftströmung radial und/oder tangential angeströmt wird. Vorzugsweise wird der Aufbereitungsrotor aus einer Anströmrichtung angeströmt, welche senkrecht zur Axialrichtung des Aufbereitungsrotor verläuft. Die Aufbereitungskammer kann beispielsweise zumindest abschnittsweise eine runde Grundform oder eine gebogene oder gekrümmte Außenmantelfläche aufweisen. Der Aufbereitungsrotor kann ein Rad, beispielsweise ein Zellenrad, Schaufelrad, Turbinenrad oder Schraubenrad, oder eine antreibbare Scheibe sein. Beispielsweise ist Aufbereitungsrotor derart in der Aufbereitungskammer angeordnet, dass die mit körnigem Material beladene Luftströmung nach dem Passieren des Aufbereitungsrotors radial und/oder tangential abgegeben wird. Der Aufbereitungsrotor kann durch die Luftströmung und/oder das körnige Material angetrieben werden. Es können mehrere Aufbereitungsrotoren hintereinander angeordnet sein.

In einer anderen bevorzugten Ausführungsform der erfindungsgemäßen Konditioniervorrichtung ist das Konditionierorgan als Aufbereitungsrotor ausgebildet, welcher derart in der Aufbereitungskammer angeordnet ist, dass der Aufbereitungsrotor von der mit körnigem Material beladenen Luftströmung axial angeströmt und/oder durchströmt wird. Die Aufbereitungskammer kann beispielsweise zumindest abschnittsweise rohrförmig ausgebildet sein. Der Aufbereitungsrotor kann ein Rad, beispielsweise ein Schaufelrad, Turbinenrad oder Schraubenrad sein. Beispielsweise ist Aufbereitungsrotor derart in der Aufbereitungskammer angeordnet, dass die mit körnigem Material beladene Luftströmung den Aufbereitungsrotors axial durchströmt. Der Aufbereitungsrotor kann durch die Luftströmung und/oder das körnige Material angetrieben werden. Der Aufbereitungsrotor kann als aktives Reflektionsorgan dienen. Vorzugsweise wird das körnige Material durch den Aufbereitungsrotor radial nach außen in Richtung der den Aufbereitungsrotor umgebenden Bewandung der Aufbereitungskammer bewegt, wo die Körner von der Luftströmung wieder erfasst werden. Der Aufbereitungsrotor ist vorzugsweise dazu eingerichtet, eine zufällige Kornablenkung nach außen zu verursachen. Die zufällige Kornablenkung kann zu einer chaotischen Kornverteilung führen. Es können mehrere Aufbereitungsrotoren hintereinander angeordnet sein. Die Aufbereitungsrotoren können auf einer gemeinsamen Welle oder getrennten Wellen angeordnet sein.

Bei einer Weiterbildung der erfindungsgemäßen Konditioniervorrichtung befinden sich in der Aufbereitungskammer keine beweglichen Teile für die Aufbereitung der mit körnigem Material beladenen Luftströmung. Die Aufbreitungskammer kann ein einen umlaufenden, kreisförmigen oder spiralförmigen Bewegungspfad für das körnige Material vorgeben. Die Aufbereitungskammer kann loopingförmig oder kreiselförmig sein. Vorzugsweise ist die Konditioniervorrichtung eine passive Konditioniervorrichtung. Die Aufbereitung der mit körnigem Material beladenen Luftströmung kann in diesem Fall beispielsweise durch innerhalb der Konditioniervorrichtung erzeugte Strömungen erfolgen, wobei die Strömungserzeugung über die Formgebung der Konditioniervorrichtung umgesetzt wird. Beispielsweise weist die Konditioniervorrichtung ein Prallelement auf, welches derart innerhalb der Konditioniervorrichtung angeordnet ist, dass das in die Konditioniervorrichtung einströmende körnige Material gegen das Prallelement prallt. Durch den Pralleffekt kann eine Vergleichmäßigung des körnigen Materials innerhalb der Luftströmung erreicht werden. Außerdem können Materialanhäufungen bzw. Materialakkumulationen durch das Prallelement aufgelöst werden.

In einer weiteren vorteilhaften Ausführungsform der erfindungsgemäßen Konditioniervorrichtung ist die Aufbereitungskammer dazu eingerichtet, die mit körnigem Material beladene Luftströmung derart in der Aufbereitungskammer zu führen, dass ein Pufferanteil des in die Aufbereitungskammer einströmenden körnigen Materials länger in der Aufbereitungskammer verbleibt als ein Ausleitungsanteil des in die Aufbereitungskammer einströmenden körnigen Materials. Die Konditioniervorrichtung weist also eine Pufferfunktion auf. Ein Teil der Körner wird zum Umsetzen der Pufferfunktion beispielsweise in Umlauf gehalten. Der andere Teil der Körner wird direkt aus der Konditioniervorrichtung ausgeleitet. Die Verweildauer des körnigen Materials kann beispielsweise durch eine geeignete Zuleitung des Luft-Material-Gemisches realisiert werden. Beispielsweise befindet sich in der Aufbereitungskammer ein Kreuzungsbereich, in welchen sich der Zuleitungspfad und der Ausbringpfad kreuzen, so dass ein Teil der im Ausbringpfad befindlichen Körner wieder dem Zuleitungspfad zugeführt wird und somit zunächst in der Aufbereitungskammer verbleibt.

In einer Weiterbildung der erfindungsgemäßen Konditioniervorrichtung ist in der Aufbereitungskammer eine Ablenkfläche angeordnet, welche dazu eingerichtet ist, das sich in der Aufbereitungskammer befindende körnige Material von einem Auslasspfad und/oder auf einen Umlaufpfad abzulenken, sodass eine Ausleitung des abgelenkten körnigen Materials aus der Aufbereitungskammer verzögert wird. Die Ablenkung des körnigen Materials erfolgt beispielsweise durch eine geeignete Geometrie der Aufbereitungskammer. Die Ablenkfläche kann schanzenförmig ausgebildet sein. Die Ablenkfläche ist vorzugsweise dazu eingerichtet, Körner daran zu hindern, einem Ausbringpfad zu folgen. Die Ablenkfläche ist vorzugsweise dazu eingerichtet, Körner auf einen Umlaufpfad zu bringen. Alternativ kann die Ablenkfläche auch eine Kornreflektionsfläche sein. Die Körner treffen beispielsweise konzentriert auf einen Reflexionspunkt auf die Ablenkfläche auf und verteilen sich von dort aus.

Die Ablenkfläche kann in die Aufbereitungskammer einfahrbar und aus der Aufbereitungskammer herausfahrbar sein, sodass das Teilungsverhältnis zwischen Umlauf und Ausbringung über die Position der Ablenkfläche beeinflussbar ist. Die Ablenkfläche kann in einer Position auch als Sperreinrichtung fungieren und die Ausleitung von körnigem Material aus der Konditioniervorrichtung gänzlich verhindern, wenn keine Ausbringung gewünscht ist. Das Teilungverhältnis entspricht dann prozentual 100 zu 0 zwischen Umlauf und Ausbringung, wobei der Umlauf vorzugsweise in Bewegung bleibt. Da die Konditioniervorrichtung, insbesondere in diesem Fall, ein anteiliges Teilungsverhältnis zwischen Ausbringung und Umlauf umsetzt, ist sie nicht zur Vereinzelung von körnigem Material eingerichtet da sich in der Praxis gezeigt hat, dass die ausgebrachte Menge, also die Ausbringung, von der der Konditioniervorrichtung zugebrachten Menge abhängig ist und die der Konditioniervorrichtung zugebrachte Menge an körnigem Material nicht ausreichend konstant gehalten werden kann. Wenn die Ausbringung wieder anlaufen soll, kann die Ablenkfläche dann stetig verfahren werden, bis das gewünschte Teilungsverhältnis erreicht ist.

Ein stetiges Verfahren der Ablenkfläche kann ebenso dazu genutzt werden, nach einer Unterbrechung der Ausleitung eine zuvor eingestellte Ausbringrate zumindest annährend unmittelbar wieder einzustellen. Dies basiert auf der Erkenntnis, dass sich im Umlauf nach Unterbrechung der Ausleitung eine erhöhte Menge körnigen Materials befindet. Die erhöhte Materialmenge im Umlauf kann aus der Entleerung einer an der Einlassöffnung angeschlossenen Ausbringleitung resultieren. Durch stetiges Verfahren der Ablenkfläche kann der überladene Umlauf mit einem Teilungsverhältnis entladen werden, so dass sich die gewünschte Ausbringrate einstellt. Vorzugsweise wird die Ablenkfläche derart verfahren, dass der sich der Umlauf auf dem Ausgangsniveau befindet bevor die Ausleitung unterbrochen wurde.

Das Verfahren der Ablenkfläche kann mit einem Sperrkörper, beispielsweise einer Klappe, am Verteilerkopf verschaltet sein, so dass die Einstellung des Teilungsverhältnisses zwischen Umlauf und Ausbringung synchron oder in Abhängigkeit der Sperrkörperbewegung am Verteilerkopf erfolgt. Abschaltpunkte mit Änderung des Teilungsverhältnisses synchronisieren).

In einer anderen bevorzugten Ausführungsform verläuft ein Strömungspfad durch die erfindungsgemäße Konditioniervorrichtung, wobei sich die Verlaufsrichtung des Strömungspfads innerhalb der Konditioniervorrichtung einmalig oder mehrfach ändert. Innerhalb der Konditioniervorrichtung erfolgt also eine Umlenkung der mit körnigem Material beladenen Luftströmung. Die Änderung der Verlaufsrichtung des Strömungspfads führt zu einem Umlenkwinkel im Strömungspfad, wobei der Umlenkwinkel vorzugsweise größer als 40 Grad, insbesondere größer als 70 Grad, ist.

Es ist darüber hinaus eine erfindungsgemäße Konditioniervorrichtung bevorzugt, bei welcher die Aufbereitungskammer und/oder das Konditionierorgan dazu eingerichtet ist, mit der Luftströmung transportierte Körner zur vereinzelten Ablage auf der landwirtschaftlichen Nutzfläche zu vereinzeln. Die Konditioniervorrichtung ist vorzugsweise eine Vereinzelungseinrichtung. Die Vereinzelungseinrichtung wird vorzugsweise pneumatisch durch eine Luftströmung angetrieben. Das Konditionierorgan ist vorzugsweise ein rotatorisch antreibbares Vereinzelungselement. Das Vereinzelungselement kann einen oder mehrere Flügel aufweisen. Das Vereinzelungselement kann eine Vereinzelungsscheibe sein. Das Vereinzelungselement kann ein Zellenrad sein.

Das Vereinzelungselement kann ein Turbinenrad aufweisen, um pneumatisch angetrieben zu werden.

Alternativ kann die Aufbereitungskammer und/oder das Konditionierorgan der erfindungsgemäßen Konditioniervorrichtung dazu eingerichtet sein, die Verteilung des mit der Luftströmung transportierten körnigen Materials zu vergleichmäßigen. Die Konditioniervorrichtung ist vorzugsweise eine Vergleichmäßigungseinrichtung. Die Vergleichmäßigungseinrichtung wird vorzugsweise pneumatisch durch eine Luftströmung angetrieben oder ist eine passive Vergleichmäßigungseinrichtung ohne bewegliche Teile. Wenn die Vergleichmäßigungseinrichtung pneumatisch angetrieben wird, kann das Konditionierorgan ein rotatorisch antreibbares Vergleichmäßigungselement, beispielsweise ein Zellenrad, Turbinenrad oder Schaufelrad, sein. Die Vergleichmäßigung innerhalb der Konditioniervorrichtung kann mehrstufig oder kaskadenartig ablaufen, beispielsweise durch eine Anordnung von mehreren Konditionierorganen hintereinander bzw. in Reihe.

In einer anderen Ausführungsform weist die erfindungsgemäße Konditioniervorrichtung eine schaltbare Sperreinrichtung zum temporären Unterbrechen der Durchleitung von körnigem Material durch die Konditioniervorrichtung auf. Durch die Konditioniervorrichtung kann es zu einer Erhöhung Latenzzeit kommen, also einer stärkeren zeitlichen Verzögerung zwischen Abschalten der Körnerzubringung und Ausbringung des letzten Korns. Um diese Latenzzeitsteigerung zu kompensieren, kann die Konditioniervorrichtung eine schaltbare Sperreinrichtung aufweisen. Die Sperreinrichtung kann beispielsweise eine bewegliche Klappe oder einen beweglichen Schieber umfassen, mit welchem ein freier Strömungsquerschnitt in der Konditioniervorrichtung oder die Auslassöffnung der Konditioniervorrichtung teilweise oder vollständig verschließbar oder blockierbar ist. Die Sperreinrichtung kann mit einem Sperrkörper, beispielsweise einer Klappe, am Verteilerkopf verschaltet sein, so dass die Durchleitung von körnigem Material durch die Konditioniervorrichtung synchron oder in Abhängigkeit der Sperrkörperbewegung am Verteilerkopf unterbrochen wird. Die Sperreinrichtung kann alternativ oder zusätzlich mit der Ablenkfläche verschaltet sein. Die Klappe oder der Schieber kann dazu eingerichtet sein, ad hoc zu schließen und/oder zu öffnen und/oder langsam bzw. sukzessive wieder zu öffnen und/oder zu schließen, um die Restmenge nicht schwallartig auszubringen. Wenn bei abgeschalteter Ausbringung keine Luft in die Konditioniervorrichtung strömt, beispielsweise weil in dem pneumatischen Fördersystem ein Verteilerkopf ohne Bypass eingesetzt wird, kann die Sperreinrichtung als nur mit Strömung überwindbares Hindernis ausgebildet sein. Mit Hilfe der Sperreinrichtung kann die Ausleitung der mit Körnern beladenen Luftströmung aus der Konditioniervorrichtung somit abrupt unterbunden und wieder aufgenommen werden, so dass zumindest annährend keine Latenzzeit mehr auftritt.

Die der Erfindung zugrundeliegende Aufgabe wird ferner durch ein pneumatisches Fördersystem der eingangs genannten Art gelöst, wobei die Konditioniervorrichtung des erfindungsgemäßen Fördersystems nach einer der vorstehend beschriebenen Ausführungsformen ausgebildet ist. Hinsichtlich der Vorteile und Modifikationen des erfindungsgemäßen Fördersystems wird zunächst auf die Vorteile und Modifikationen der erfindungsgemäßen Konditioniervorrichtung verwiesen.

Das erfindungsgemäße Fördersystem kann eine Materialablageeinrichtung aufweisen, mittels welcher das körnige Material auf einer landwirtschaftlichen Nutzfläche ablegbar ist. Die Konditioniervorrichtung ist vorzugsweise an der Materialablageeinrichtung angeordnet und/oder an der Materialablageeinrichtung montiert. Die Materialablageeinrichtung kann ein Schar, insbesondere ein Säschar oder ein Düngerschar sein. Die Konditioniervorrichtung kann auf dem Schar angeordnet sein, so dass das Schar und die Konditioniervorrichtung gemeinsam gegenüber dem Rest des Fördersystems beweglich sind.

In einer Weiterbildung weist das erfindungsgemäße Fördersystem eine Abscheideeinrichtung auf, mittels welcher ein Teil der Luft aus der in der Ausbringleitung geführten und mit körnigem Material beladenen Luftströmung abscheidbar ist. Die Abscheideeinrichtung kann Bestandteil der Konditioniervorrichtung sein oder in die Konditioniervorrichtung integriert sein. Die Abscheideeinrichtung kann in Strömungsrichtung der Luftströmung vor oder hinter der Konditioniervorrichtung angeordnet sein. Vorzugsweise ist die Konditioniervorrichtung dazu eingerichtet, durch die von der Abscheideeinrichtung abgeschiedene Luft angetrieben zu werden. Wenn die Konditioniervorrichtung und die Abscheideeinrichtung beabstandet voneinander sind, kann die zum Antrieb der Konditioniervorrichtung genutzte Luft über eine Leitung zwischen der Konditioniervorrichtung und der Abscheideeinrichtung der Konditioniervorrichtung bereitgestellt werden.

Das erfindungsgemäße Fördersystem wird ferner durch einen Luftauslass vorteilhaft weitergebildet, über welchen die durch die Abscheideeinrichtung abgeschiedene Luft in die Umgebung ausleitbar ist. Vor dem Ausleiten in die Umgebung kann die abgeschiedene Luft zum Antrieb der Konditioniervorrichtung verwendet werden. Der Luftauslass kann an der Konditioniervorrichtung ausgebildet sein. Wenn die abgeschiedene Luft nicht zum Antrieb der Konditioniervorrichtung genutzt wird, kann der Luftauslass auch direkt an der Abscheideeinrichtung ausgebildet sein. Alternativ oder zusätzlich weist das Fördersystem eine Rückführeinrichtung auf, über welche die durch die Abscheideeinrichtung abgeschiedene Luft, insbesondere nach der Verwendung zum Antrieb der Konditioniervorrichtung, wieder in die mit körnigem Material beladene Luftströmung zurückführbar ist.

In einer anderen bevorzugten Ausführungsform des erfindungsgemäßen Fördersystems ist der Strömungserzeuger dazu eingerichtet, die Luftströmung zum Transport des körnigen Materials zu erzeugen, wobei die Ausbringleitung dazu eingerichtet ist, die von dem Strömungserzeuger erzeugte und mit körnigem Material beladene Luftströmung zu einer Materialablageeinrichtung der landwirtschaftlichen Ausbringmaschine zu führen. Zwischen dem Strömungserzeuger und der Ausbringleitung ist vorzugsweise ein Dosierer angeordnet, über welchen das körnige Material in die von dem Strömungserzeuger erzeugte Luftströmung eingeleitet wird. Nach dem Einleiten des körnigen Materials in die von dem Strömungserzeuger erzeugte Luftströmung erfolgt vorzugsweise eine Aufteilung der Luftströmung in mehrere Einzelströmungen, wobei die mit körnigem Material beladenen Einzelströmungen in verschiedene Ausbringleitungen der Ausbringmaschine eingeleitet werden.

Das erfindungsgemäße Fördersystem wird ferner durch einen Strömungsteiler vorteilhaft weitergebildet, wobei der Strömungsteiler dazu eingerichtet ist, die von dem Strömungserzeuger erzeugte Luftströmung in eine erste Luftströmung zum Transport des körnigen Materials und eine zweite Luftströmung zum Antreiben der Konditioniervorrichtung zu teilen. Auf diese Weise ist es möglich, dass die Konditioniervorrichtung von einer Luftströmung angetrieben wird, welche nicht mit körnigem Material beladen ist. Der Strömungsteiler kann eine Schutzeinrichtung aufweisen, welche verhindert, dass körniges Material in der zum Antreiben der Konditioniervorrichtung eingesetzten zweiten Luftströmung vorhanden ist. Die Schutzeinrichtung kann beispielsweise ein Gitter, ein Sieb oder ein Filter sein, über welche die Einleitung von körnigem Material in eine Leitung für die zweite Luftströmung verhindert wird.

In einer vorteilhaften Ausführungsform weist das erfindungsgemäße Fördersystem einen weiteren Strömungserzeuger auf, welcher dazu eingerichtet ist, die Luftströmung zum Transport des körnigen Materials zu erzeugen, wobei die Ausbringleitung dazu eingerichtet ist, die von dem weiteren Strömungserzeuger erzeugte und mit dem körnigem Material beladene Luftströmung zu einer Materialablageeinrichtung der landwirtschaftlichen Ausbringmaschine zu führen. Der weitere Strömungserzeuger kann ein Gebläse sein. In diesem Fall werden also verschiedene Strömungserzeuger zum Erzeugen der Luftströmung für das körnige Material und zum Erzeugen der Luftströmung zum Antreiben der Konditioniervorrichtung eingesetzt.

In einer Weiterbildung weist das erfindungsgemäße Fördersystem eine Verteileinrichtung zum Aufteilen einer von dem Strömungserzeuger erzeugten und mit körnigem Material beladenen Hauptluftströmung in mehrere von dem Strömungserzeuger erzeugte und mit körnigem Material beladene Luftströmungen auf. Die Verteileinrichtung kann beispielsweise ein Verteilerkopf sein. Alternativ kann die Verteileinrichtung ein oder mehrere Y-Stücke aufweisen, welche beispielsweise in Reihe geschaltet sein können. Die Y-Stücke können dezentral auf der Ausbringmaschine verteilt sein. Die Konditioniervorrichtung ist der Verteileinrichtung vorzugsweise nachgeschaltet. Die Verteileinrichtung weist vorzugsweise mehrere Abgänge auf, welche jeweils mit einer Ausbringleitung verbunden sind. Die Abgänge oder die Verbindung zwischen den Abgängen und der jeweiligen Ausbringleitung kann durch Sperrkörper gesperrt werden, sodass die Einleitung von Material in die Ausbringleitung gesperrt und freigegeben werden kann. Durch die Sperrkörper kann die Materialausbringung entlang von einzelnen Reihen unterbrochen werden. Bei gesperrter Materialausbringung kann weiterhin Luft in die gesperrte Ausbringleitung einleitbar sein. So kann trotz Sperrung der Abgänge ein permanenter Luftstrom zu den Ablageeinrichtungen umgesetzt werden. Die Verteileinrichtung kann eine Materialrückführung aufweisen, über welche Material, welches nicht in die Ausbringleitung ausgeleitet wird, wieder in die Hauptluftströmung zurückgeführt werden kann. In der Verteileinrichtung kann ein Verteilrotor angeordnet sein, welcher dazu eingerichtet ist, das mit der Hauptluftströmung transportierte körnige Material auf mehrere Luftströmungen aufzuteilen. Die Sperrkörper zum Sperren und Freigeben der Materialeinleitung in die Ausbringleitungen können bewegbare, beispielsweise schwenkbare, Klappen oder Wippen sein. Die Sperrkörper werden vorzugsweise von einem steuerbaren Stellantrieb angetrieben. Die Stellantriebe der jeweiligen Sperrkörper können beispielsweise elektromotorische Antriebe sein.

In einer weiteren bevorzugten Ausführungsform weist das erfindungsgemäße Fördersystem mehrere Ausbringleitungen auf, welche dazu eingerichtet sind, eine mit körnigem Material beladene Luftströmung zu einer Materialablageeinrichtung der landwirtschaftlichen Ausbringmaschine zu führen. Vorzugsweise weist das Fördersystem mehrere Konditioniervorrichtungen auf, welche jeweils einer Ausbringleitung zugeordnet und dazu eingerichtet sind, die durch die jeweilige Ausbringleitung strömende und mit körnigem Material beladene Luftströmung aufzubereiten. Dadurch, dass mehreren oder sämtlichen Ausbringleitungen eine Konditioniervorrichtung zugeordnet ist, wird gleichzeitig zur Verbesserung des Längsverteilung des Materials eine Verbesserung der Querverteilung des Materials auf der landwirtschaftlichen Nutzfläche erreicht.

Es ist ferner ein erfindungsgemäßes Fördersystem mit einer Materialerfassungseinrichtung bevorzugt, wobei die Materialerfassungseinrichtung dazu eingerichtet ist, dass durch die Ausbringleitung geförderte Material zu erfassen, wobei das Fördersystem zumindest eine Steuerungseinrichtung umfasst, welche dazu eingerichtet ist, die Materialverteilung in der Verteileinrichtung und/oder die Konditioniervorrichtung in Abhängigkeit der Materialerfassung der Materialerfassungseinrichtung zu steuern. Die Materialverteilung in der Verteileinrichtung kann über das Steuern der Sperrkörper gesteuert werden. Mittels der Steuerungseinrichtung kann ferner ein Dosierer gesteuert werden, welcher die von dem Strömungserzeuger erzeugte Luftströmung mit dem körnigen Material belädt. In diesem Fall sind Materialerfassungssignale aus allen Ausbringleitungen des Fördersystems bzw. der Ausbringmaschine erforderlich, da über den Dosierer die Gesamtbeladung der von dem Strömungserzeuger erzeugten Luftströmung mit körnigem Material verändert werden kann.

In einer bevorzugten Ausführungsform des erfindungsgemäßen Fördersystems ist die Materialerfassungseinrichtung als Körnerzähler ausgebildet. Der Körnerzähler kann beispielsweise ein optischer Sensor sein und/oder eine Lichtschranke aufweisen, sodass die einen Detektionsbereich innerhalb der Ausbringleitung passierenden Körner erfasst werden können.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Fördersystems in einer schematischen Darstellung;
- Fig. 2: ein weiteres Ausführungsbeispiel des erfindungsgemäßen Fördersystems in einer schematischen Darstellung;
- Fig. 3: ein weiteres Ausführungsbeispiel des erfindungsgemäßen Fördersystems in einer schematischen Darstellung;
- Fig. 4: eine erfindungsgemäße Konditioniervorrichtung in einer schematischen Schnittdarstellung;
- Fig. 5: die in der Fig. 4 abgebildete Konditioniervorrichtung in einer Draufsicht;
- Fig. 6: die in der Fig. 4 abgebildete Konditioniervorrichtung in einer Seitenansicht;
- Fig. 7: die in der Fig. 4 abgebildete Konditioniervorrichtung in einer Frontansicht;
- Fig. 8: eine weitere erfindungsgemäße Konditioniervorrichtung in einer schematischen Schnittdarstellung;
- Fig. 9: die in der Fig. 8 abgebildete Konditioniervorrichtung in einer Draufsicht;
- Fig. 10: die in der Fig. 8 abgebildete Konditioniervorrichtung in einer Seitenansicht;
- Fig. 11: die in der Fig. 8 abgebildete Konditioniervorrichtung in einer Frontansicht;
- Fig. 12: eine erfindungsgemäße Konditioniervorrichtung ohne bewegliche Teile für die Aufbereitung der mit körnigem Material beladenen Luftströmung in einer schematischen Darstellung;
- Fig. 13: eine weitere erfindungsgemäße Konditioniervorrichtung ohne bewegliche Teile für die Aufbereitung der mit körnigem Material beladenen Luftströmung in einer schematischen Darstellung;
- Fig. 14: eine weitere erfindungsgemäße Konditioniervorrichtung ohne bewegliche Teile für die Aufbereitung der mit körnigem Material beladenen Luftströmung in einer schematischen Darstellung;
- Fig. 15: eine erfindungsgemäße Konditioniervorrichtung mit zwei Aufbereitungsrotoren für die Aufbereitung der mit körnigem Material beladenen Luftströmung in einer schematischen Darstellung;
- Fig. 16: einen Aufbereitungsrotor einer erfindungsgemäßen Konditioniervorrichtung in einer schematischen Darstellung;
- Fig. 17: einen weiteren Aufbereitungsrotor einer erfindungsgemäßen Konditioniervorrichtung in einer schematischen Darstellung;
- Fig. 18: eine erfindungsgemäße Konditioniervorrichtung mit einem Aufbereitungsrotor für die Aufbereitung der mit körnigem Material beladenen Luftströmung in einer schematischen Darstellung;
- Fig. 19: eine weitere erfindungsgemäße Konditioniervorrichtung mit einem Aufbereitungsrotor für die Aufbereitung der mit körnigem Material beladenen Luftströmung in einer schematischen Darstellung;
- Fig. 20: die in der Fig. 19 abgebildete Konditioniervorrichtung in einer weiteren schematischen Darstellung; und
- Fig. 21: die in der Fig. 19 abgebildete Konditioniervorrichtung in einer weiteren schematischen Darstellung.

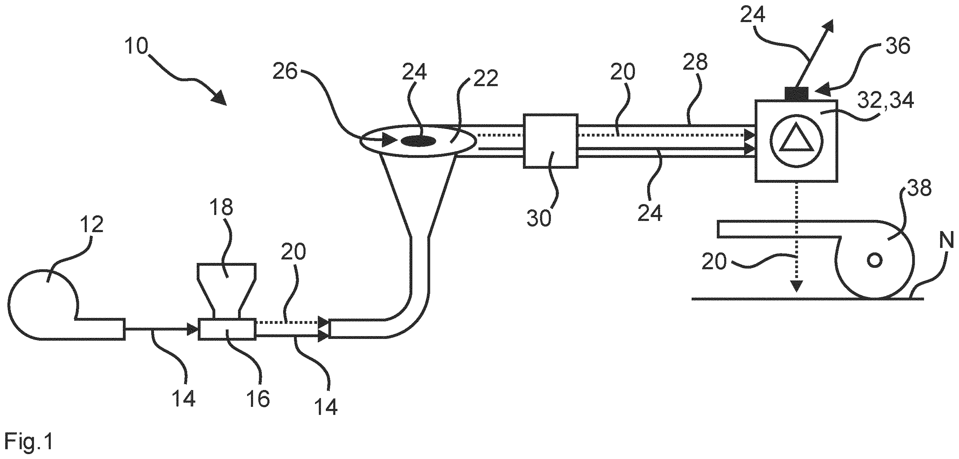

Die Fig. 1 zeigt ein pneumatisches Fördersystem 10 einer als Sämaschine ausgebildeten landwirtschaftlichen Ausbringmaschine. Das Fördersystem 10 umfasst einen als Gebläse ausgebildeten Strömungserzeuger 12, mittels welchem eine Luftströmung 14 erzeugt werden kann. Die Luftströmung 14 wird einem Dosierer 16 zugeleitet, wobei der Dosierer 16 mit einem Vorratsbehälter 18 verbunden ist. In dem Vorratsbehälter 18 befindet sich körniges Material 20, nämlich Saatgut. Der Dosierer 16 bringt das körnige Material 20 in die Luftströmung 14 ein, sodass eine mit körnigem Material 20 beladene Luftströmung 14 erzeugt wird. Die mit körnigem Material 20 beladene Luftströmung 14 wird einer als Verteilerkopf ausgebildeten Verteileinrichtung 22 zugeleitet. Die Verteileinrichtung 22 dient zum Aufteilen der vom Strömungserzeuger 12 erzeugten und mit körnigem Material 20 beladenen Hauptluftströmung 14 in mehrere von dem Strömungserzeuger 12 erzeugte und mit körnigem Material 20 beladene Luftströmungen 24. Die Verteileinrichtung 22 weist mehrere Abgänge auf, welche entlang des Umfangs der Verteileinrichtung 22 angeordnet sind. Innerhalb der Verteileinrichtung 22 ist ein Verteilrotor 26 angeordnet, welcher für eine gleichmäßige Verteilung des Materials 20 auf die Abgänge der Verteileinrichtung 22 sorgt. Die Abgänge der Verteileinrichtung 22 sind jeweils mit einer Ausbringleitung 28 verbunden, wobei die Ausbringleitungen 28 jeweils dazu eingerichtet sind, eine mit körnigem Material 20 beladene Luftströmung 24 zu einer Materialablageeinrichtung 38 der landwirtschaftlichen Ausbringmaschine zu führen. Die Materialablageeinrichtungen 38 können beispielsweise Säschare sein. Der Übersicht halber sind in den Figuren 1 bis 3 jeweils nur eine einzige Ausbringleitung 28 und eine Materialablageeinrichtung 38 abgebildet, wenngleich das Fördersystem 10 eine Vielzahl entsprechender Komponenten umfassen kann.

Das Fördersystem 10 weist mehrere Materialerfassungseinrichtungen 30 auf, wobei in jeder Ausbringleitung 28 eine Materialerfassungseinrichtung 30 angeordnet ist. Die Materialerfassungseinrichtungen 30 sind dazu eingerichtet, dass durch die jeweilige Ausbringleitung 28 geförderte Material 20 zu erfassen. Die Materialerfassungseinrichtungen 30 sind beispielsweise Körnerzähler, welche die Materialerfassung über einen optischen Sensor oder eine Lichtschranke umsetzen.

Das Fördersystem 10 umfasst ferner mehrere Konditioniervorrichtungen 32, welche jeweils einer Ausbringleitung 28 zugeordnet sind. Die Konditioniervorrichtungen 32 sind jeweils dazu eingerichtet, die durch die jeweilige Ausbringleitung 28 strömende und mit körnigem Material 20 beladene Luftströmung 24 aufzubereiten. Durch die Aufbereitung der mit körnigem Material 20 beladenen Luftströmung 24 durch die Konditioniervorrichtung 32 wird die Längsverteilung des Materials 20 verbessert. Dadurch, dass jeder Ausbringleitung 28 eine Konditioniervorrichtung 32 zugeordnet ist, wird gleichzeitig zur Verbesserung der Längsverteilung des Materials 20 eine Verbesserung der Querverteilung des Materials 20 auf der landwirtschaftlichen Nutzfläche N erreicht.

Die Konditioniervorrichtung 32 wird ohne die Zuführung von externer Energie betrieben und weist keine beweglichen Teile auf. Es handelt sich also um eine passive Konditioniervorrichtung 32. Die Konditioniervorrichtung 32 sorgt für eine Vergleichmäßigung der Verteilung des mit der Luftströmung 24 transportierten körnigen Materials 20. Die Konditioniervorrichtung 32 ist also eine Vergleichmäßigungseinrichtung.

Das Fördersystem 10 weist ferner eine Abscheideeinrichtung 34 auf, welche Bestandteil der Konditioniervorrichtung 32 ist. Die Abscheideeinrichtung 34 ist also in die Konditioniervorrichtung 32 integriert. Mittels der Abscheideeinrichtung 34 wird ein Teil der Luft aus der in der Ausbringleitung 28 geführten Luftströmung 24 abgeschieden. Die Konditioniervorrichtung 32 weist einen Luftauslass 36 auf, über welchen die durch die integrierte Abscheideeinrichtung 34 abgeschiedene Luft in die Umgebung ausgeleitet werden kann. Der vergleichmäßigte Materialstrom 20 wird dann der Ablageeinrichtung 38 zugeführt, wobei die Ablageeinrichtung das körnige Material 20 auf der landwirtschaftlichen Nutzfläche N ablegt.

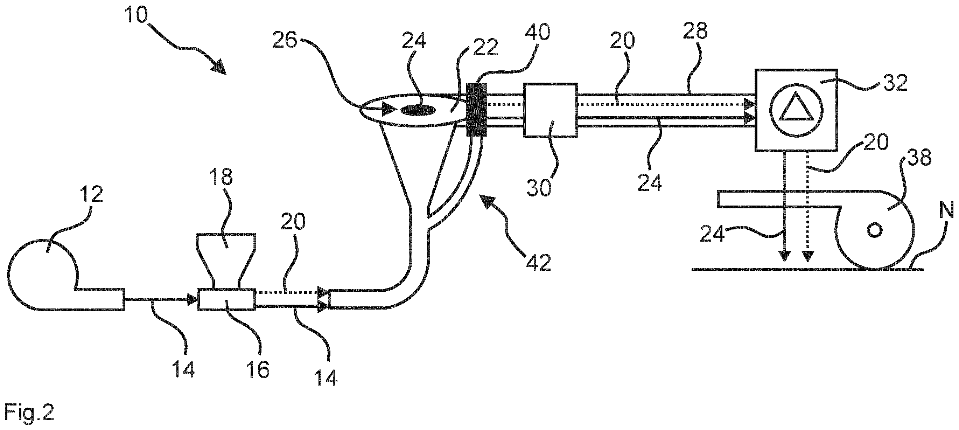

Die Fig. 2 zeigt ein Fördersystem 10 mit einer Mehrzahl von Umlenkeinrichtungen 40. Die Umlenkeinrichtungen 40 sind jeweils an den Abgängen der als Verteilerkopf ausgebildeten Verteileinrichtung 22 angeordnet und weisen einen beweglichen Sperrkörper auf. Der Sperrkörper dient zum Sperren der Verbindung zwischen den Abgängen und den jeweiligen Ausbringleitungen 28. Über die Sperrkörper der Umlenkeinrichtung 40 kann die Einleitung von Material 20 in die jeweilige Ausbringleitung 28 gesperrt und freigegeben werden. Wenn die Einleitung von Material 20 in die Ausbringleitung 28 gesperrt ist, kann weiterhin Luft in die gesperrte Ausbringleitung 28 eingeleitet werden. Das Material 20 wird jedoch über die Umlenkeinrichtung 40 so umgelenkt, dass es in eine Materialrückführung 42 der Verteileinrichtung 22 eingeleitet wird. Über die Materialrückführung 42 wird Material 20, welches nicht in die Ausbringleitung 28 eingeleitet wird, wieder in die Hauptluftströmung 14 zurückgeführt.

Der Sperrkörper kann beispielsweise in eine Sperrstellung verbracht werden, in welcher das Einleiten von Material 20 in die Ausbringleitung 28 gesperrt ist. Ferner kann der Sperrkörper in eine Freigabestellung verbracht werden, in welcher die Einleitung von Material 20 in die Ausbringleitung 28 freigegeben ist. Der Sperrkörper kann beispielsweise über einen elektromotorischen Stellantrieb in die Sperrstellung und in die Freigabestellung verbracht werden. Die Sperrkörper bzw. die Stellantriebe der Sperrkörper können über eine Steuerungseinrichtung in Abhängigkeit der durch die Materialerfassungseinrichtung 30 erfassten Materialverteilung innerhalb der Ausbringleitung 28 gesteuert werden. Wenn über einen längeren Zeitraum eine zu hohe Gesamtmenge an körnigem Material 20 in einer Ausbringleitung 28 mittels der Materialerfassungseinrichtung 30 detektiert wird, kann die Materialeinleitung mittels des Sperrkörpers der Umlenkeinrichtung 40 kurzzeitig unterbrochen werden. Alternativ kann der Sperrkörper der Umlenkeinrichtung 40 auch derart ausrichtbar sein, dass die Menge an Material 20, welches in die Ausbringleitung 28 eingeleitet wird, reduziert wird. In diesem Fall könnte auch eine temporäre oder dauerhafte Reduzierung der Menge des in die Ausbringleitung 28 eingeleiteten Materials 20 umgesetzt werden.

Die Konditioniervorrichtung 32 weist in der in Fig. 2 dargestellten Ausführungsform keinen separaten Luftabscheider auf. Die Konditioniervorrichtung 32 weist ein internes Prallelement 54 auf, an welchem die Körner des Materials 20 abprallen, wobei der Pralleffekt zu einer Vergleichmäßigung der Materialströmung führt.

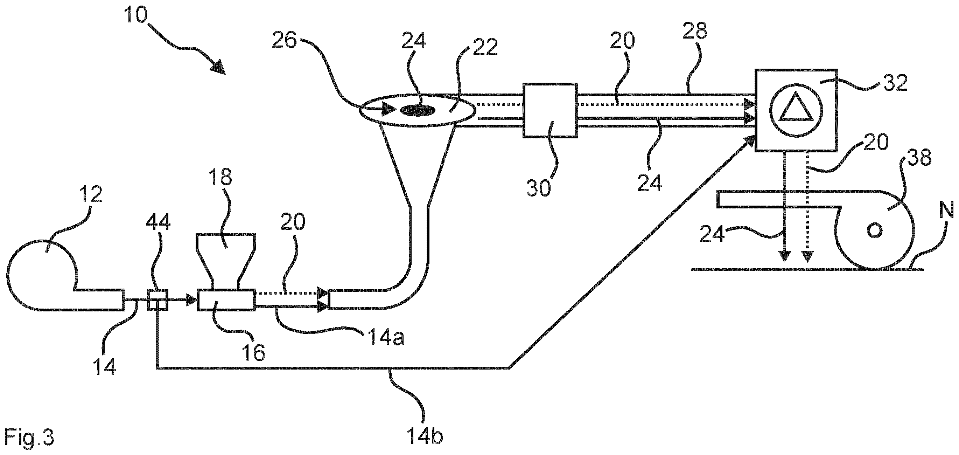

Die Fig. 3 zeigt ein pneumatisches Fördersystem 10 mit einem Strömungsteiler 44, wobei der Strömungsteiler 44 die von dem Strömungserzeuger 12 erzeugte Luftströmung 14 in eine erste Luftströmung 14a zum Transport des körnigen Materials 20 und eine zweite Luftströmung 14b zum Antreiben der Konditioniervorrichtung 32 teilt. Die Konditioniervorrichtung 32 ist in dieser Ausführungsform also eine pneumatisch angetriebene Konditioniervorrichtung 32. Die Konditioniervorrichtung 32 weist ein rotatorisch angetriebenes Konditionierorgan auf, wobei das Konditionierorgan über die Luftströmung 14b bewegt wird. Das Konditionierorgan ist ein Vergleichmäßigungsrotor.

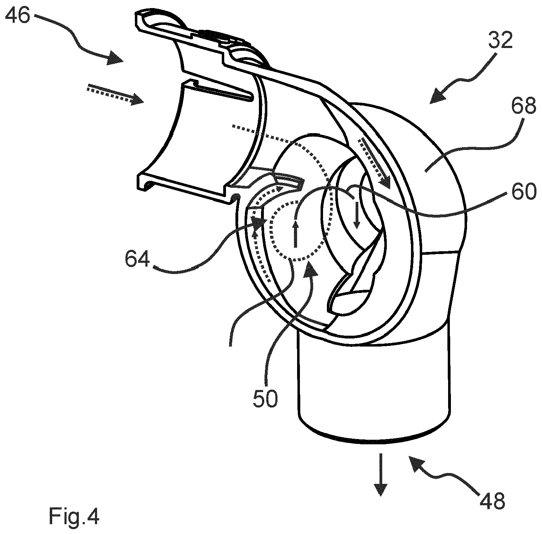

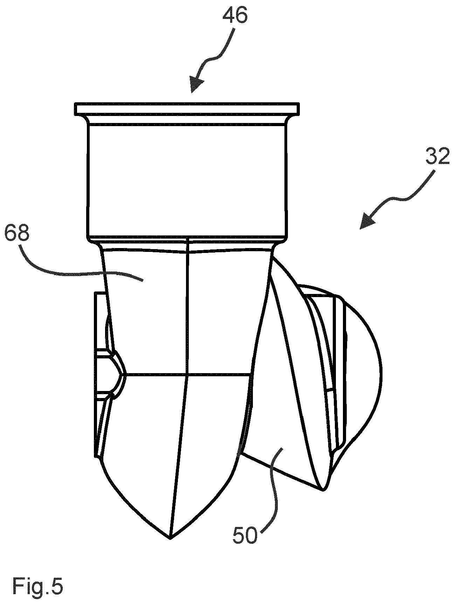

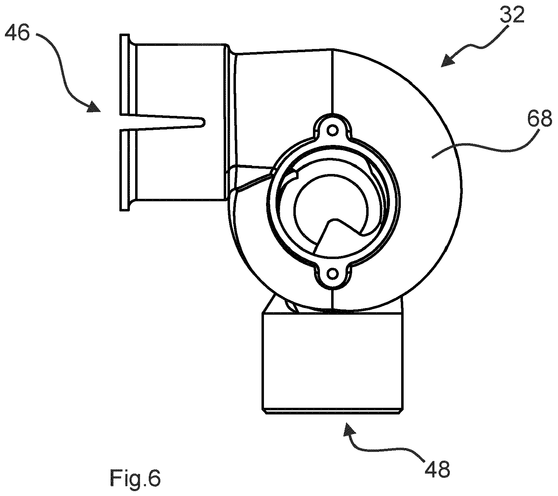

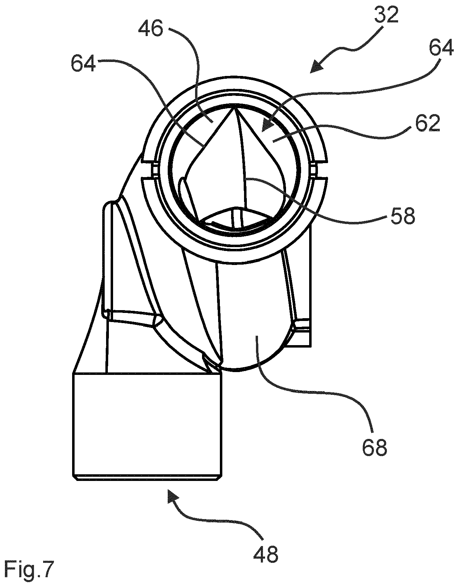

Die Fig. 4 bis 7 zeigen eine passive Konditioniervorrichtung 32, welche ohne die Zuführung von externer Energie betrieben wird und keine beweglichen Teile aufweist. Hinter der Einlassöffnung 46 befindet sich eine Trennkante 58, welche einen Direktpfad 60 durch die Aufbereitungskammer 64 der Konditioniervorrichtung 32 von einem Umlaufpfad 62 durch die Aufbereitungskammer 64 der Konditioniervorrichtung 32 trennt. Ein Teil der mit körnigem Material 20 beladenen Luftströmung 24 folgt dem Direktpfad 60 und ein anderer Teil der mit körnigem Material 20 beladenen Luftströmung 24 folgt dem Umlaufpfad 62. Die Zentrifugalkraft sorgt dafür, dass das Material 20 entlang der Wandungen der Spiralführung 50 geführt wird.

Durch die Aufteilung der über die Einlassöffnung 46 einströmenden mit körnigem Material 20 beladenen Luftströmung 24 auf den Direktpfad 60 und den Umlaufpfad 62 können Kornanhäufungen aufgelöst werden. Der Umlaufpfad 62 setzt außerdem eine Pufferfunktion um. Ein Pufferanteil des in die Aufbereitungskammer einströmenden körnigen Materials 20 wird entlang des Umlaufpfads 62 geführt, sodass dieser Pufferanteil länger in der Aufbereitungskammer verbleibt als ein Ausleitungsanteil des in die Aufbereitungskammer einströmenden körnigen Materials 20, welcher entlang des Direktpfads 60 geführt wird.

Durch das Zusammenführen des Direktpfads 60 mit dem Umlaufpfad 62 kommt es außerdem zu einer Neuvermischung der Materialkörner, sodass etwaige Kornlücken im Materialstrom aufgefüllt werden. Innerhalb der Konditioniervorrichtung 32 erfolgt also eine mehrstufige, hier eine zweistufige Vergleichmäßigung der Materialverteilung, sodass die aus der Auslassöffnung 48 austretende und mit körnigem Material 20 beladene Luftströmung 24 eine gleichmäßigere Materialverteilung aufweist als die durch die Einlassöffnung 46 in die Konditioniervorrichtung 32 einströmende mit körnigem Material 20 beladene Luftströmung 24.

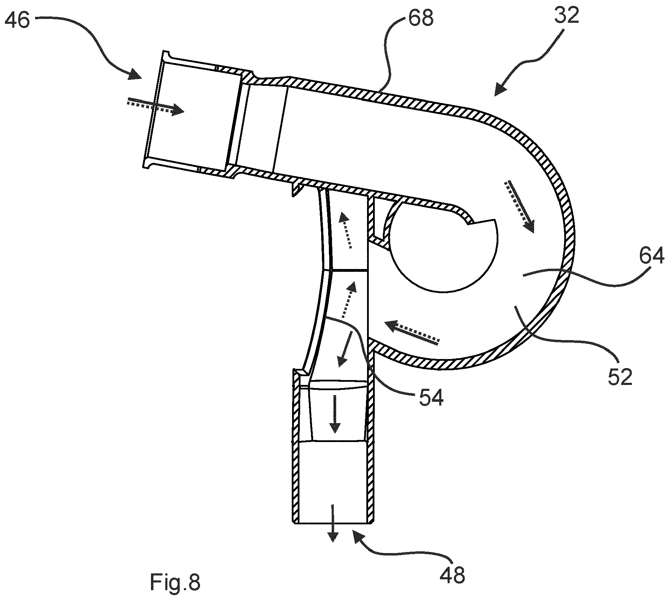

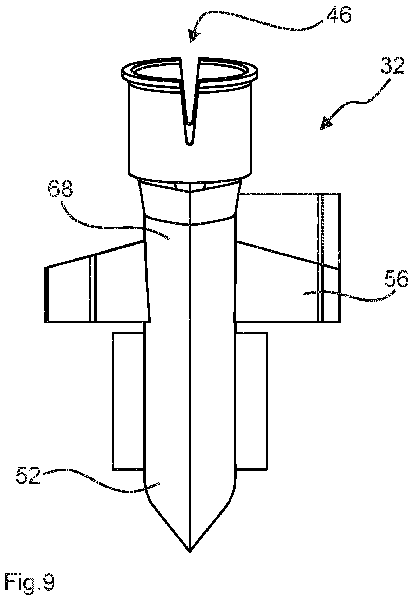

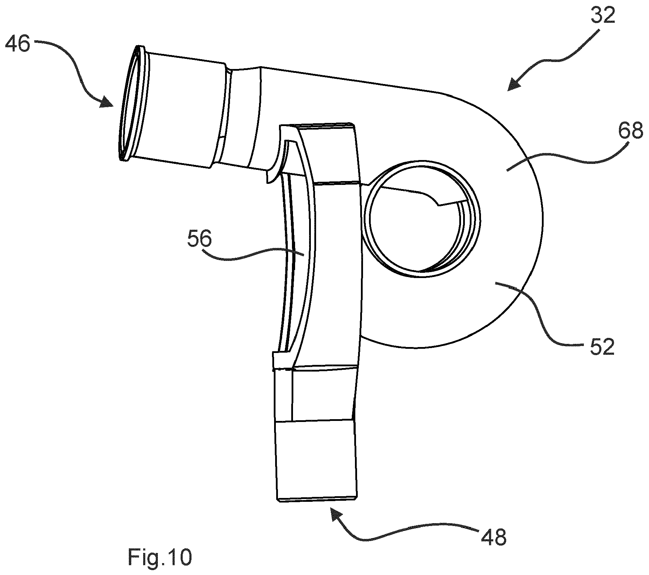

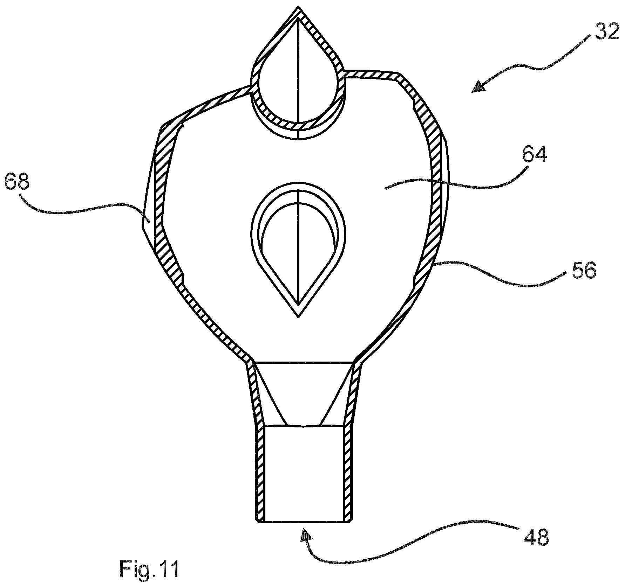

Die Fig. 8 bis 11 zeigen eine Konditioniervorrichtung 32, bei welcher die über die Einlassöffnung 46 einströmende und mit körnigen Material 20 beladene Luftströmung 24 zunächst entlang einer Windung 52 geführt wird, wobei die aus der Windung 52 austretenden Materialkörner auf ein Prallelement 54, nämlich auf eine Prallfläche, aufprallen. Das Prallelement 54 befindet sich in einer Prallkammer 56 der Konditioniervorrichtung 32. Die Windung 52 und die Prallkammer 56 sind Bestandteile der Aufbereitungskammer 64 der Konditioniervorrichtung 32. Die Prallfläche ist gebogen bzw. gekrümmt ausgebildet, sodass sich abhängig von der Aufprallposition unterschiedliche Abprallrichtungen ergeben. Die Windung 52 kann derart ausgebildet sein, dass das körnige Material 20 mittig oder außermittig auf die Prallfläche 54 trifft. Die Prallkammer 56 kann eine symmetrische Grundform oder eine asymmetrische Grundform aufweisen. In anderen Ausführungsformen kann die Prallfläche auch eben bzw. plan sein.

Das Prallelement 54 führt zu einer Vergleichmäßigung der Materialverteilung, sodass die aus der Auslassöffnung 48 austretende und mit körnigem Material 20 beladene Luftströmung 24 eine gleichmäßigere Materialverteilung aufweist als die durch die Einlassöffnung 46 in die Konditioniervorrichtung 32 eintretende und mit körnigem Material 20 beladene Luftströmung 24.

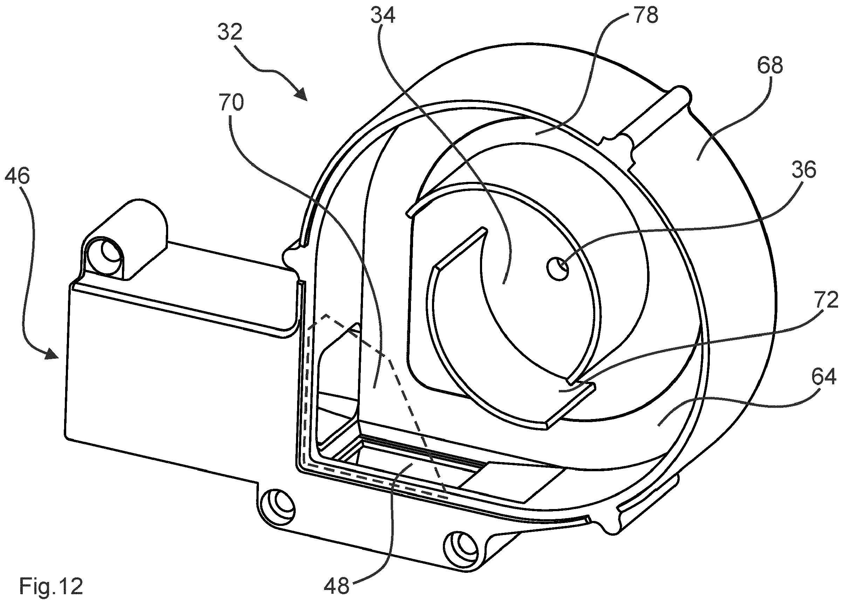

Die Fig. 12 zeigt ebenfalls eine stromlos betreibbare Konditioniervorrichtung 32 für ein pneumatisches Fördersystem 10 einer landwirtschaftlichen Ausbringmaschine. Die Konditioniervorrichtung 32 umfasst eine Einlassöffnung 46, über welche eine mit körnigem Material 20 beladene Luftströmung 24 in die Konditioniervorrichtung 32 einleitbar ist. In Strömungsrichtung hinter der Einlassöffnung 46 befindet sich eine Aufbereitungskammer 64 zum Aufbereiten der durch die Einlassöffnung 46 einströmenden mit körnigem Material 20 beladenen Luftströmung 24. Die aufbereitete mit körnigem Material 20 beladene Luftströmung 24 wird dann über eine mit der Aufbereitungskammer 64 verbundene Auslassöffnung 48 aus der Konditioniervorrichtung 32 ausgeleitet. Das Gehäuse 68 der Konditioniervorrichtung 32 und der in dem Gehäuse 68 angeordnete Einsatz 78 sind so gestaltet, dass die Aufbereitungskammer 64 eine Loopingform aufweist.

Die loopingförmige Aufbereitungskammer 64 unterstützt die Vergleichmäßigung der Verteilung des mit der Luftströmung 24 transportierten körnigen Materials 20. Innerhalb der Aufbereitungskammer 64 befinden sich keine beweglichen Teile für die Aufbereitung der mit körnigem Material 20 beladenen Luftströmung 24. Die Aufbereitungskammer 64 ist dazu eingerichtet, die mit körnigem Material 20 beladene Luftströmung 24 derart in der Aufbereitungskammer 64 zu führen, dass ein Pufferanteil des in die Aufbereitungskammer 64 einströmenden körnigen Materials 20 länger in der Aufbereitungskammer 64 verbleibt als ein Ausleitungsanteil des in die Aufbereitungskammer 64 einströmenden körnigen Materials 20. Hierzu weist die Aufbereitungskammer 64 einen Kreuzungsbereich 70 auf, in welchen sich der von der Einlassöffnung 46 kommende und in die loopingförmige Aufbereitungskammer 64 führende Zuleitungspfad und der zur Auslassöffnung 48 führende und aus der loopingförmigen Aufbereitungskammer 64 herausführende Ausbringpfad kreuzen, so dass ein Teil der im Ausbringpfad befindlichen Körner wieder dem Zuleitungspfad zugeführt wird und somit zunächst für einen weiteren Looping-Umlauf in der Aufbereitungskammer 46 verbleibt.

Die Konditioniervorrichtung 32 umfasst ferner eine Abscheideeinrichtung 34, mittels welcher ein Teil der Luft aus der Aufbereitungskammer 64 abscheidbar ist. Hierzu ist die loopingförmige Aufbereitungskammer 64 über eine Abführöffnung 72 mit einem Luftauslass 36 Abscheideeinrichtung 34 verbunden, über welchen die aus der Aufbereitungskammer 64 herausgeführte Luft in die Umgebung ausleitbar ist.

Zwischen der Einlassöffnung 46 und dem Kreuzungsbereich 70 kann ein Querschnittsübergang von einem runden Querschnitt, welcher im Wesentlichen dem Querschnitt eines Verbindungsschlauchs entsprechen kann, zu einem viereckigen Querschnitt, welcher im Wesentlichen der Form der Einströmöffnung der Aufbereitungskammer 64 entsprechen kann, vorhanden sein. Der Querschnittsübergang kann eine Querschnittsverengung sein, sodass sich ein Düseneffekt ergibt, über welchen das körnige Material 20 beschleunigt wird.

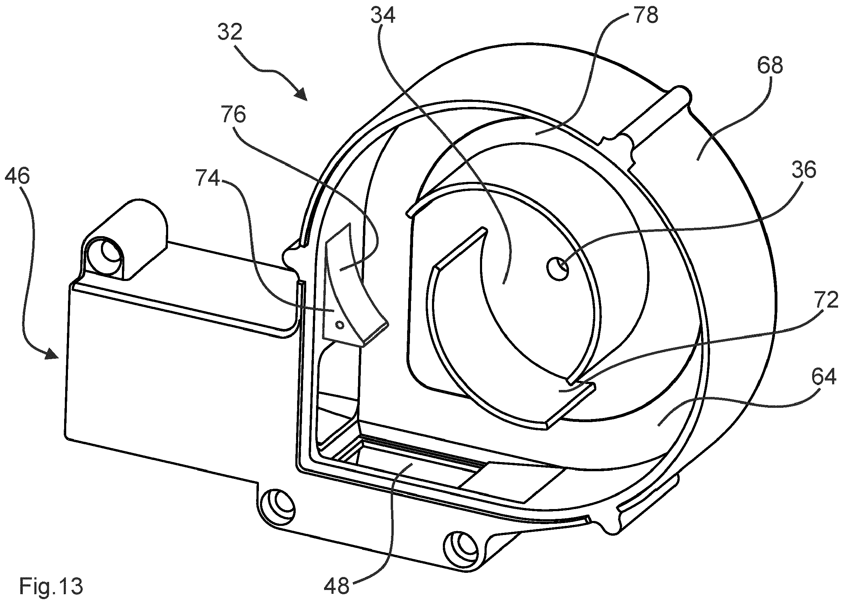

Die Fig. 13 zeigt eine Konditioniervorrichtung 32, bei welcher in der Aufbereitungskammer 64 ein Ablenkkörper 74 angeordnet ist. Der Ablenkkörper 74 trägt eine schanzenartige Ablenkfläche 76, welche dazu eingerichtet ist, das sich in der Aufbereitungskammer 64 befindende körnige Material 20 von einem Auslasspfad und auf einen Umlaufpfad abzulenken, sodass eine Ausleitung des abgelenkten körnigen Materials 20 aus der Aufbereitungskammer 64 verzögert wird. Das abgelenkte körnige Material 20 wird wieder in den Looping geleitet und kann im folgenden Umlauf die Aufbereitungskammer 64 verlassen, sofern das körnige Material 20 nicht erneut von der Ablenkfläche 76 von dem Auslasspfad abgelenkt wird.

Der Ablenkkörper 74 samt Ablenkfläche 76 erstrecken sich über einen Teilabschnitt der Kammerbreite der loopingförmigen Aufbereitungskammer 64, sodass sich seitlich des Ablenkkörpers 74 ein Bereich befindet, in welchem das körnige Material 20 nicht von der Ablenkfläche 76 abgelenkt wird und die Konditioniervorrichtung 32 durch die Auslassöffnung 48 verlassen kann.

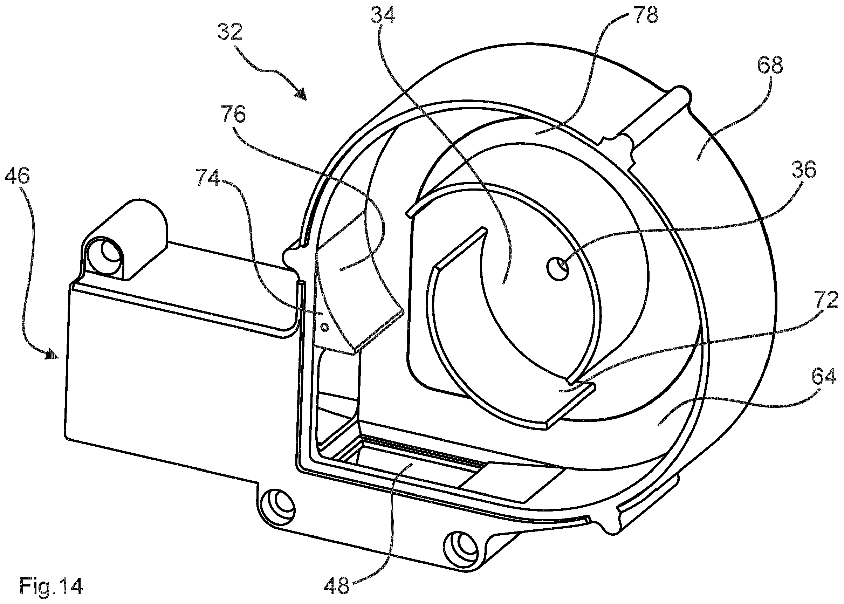

Die Fig. 14 zeigt eine Konditioniervorrichtung 32, bei welcher der Ablenkkörper 74 samt Ablenkfläche 76 in die Aufbereitungskammer 64 hereinfahrbar und aus der Aufbereitungskammer 64 herausfahrbar ist, sodass der in der Aufbereitungskammer 64 verbleibende Pufferanteil des körnigen Materials 20 über die Stellung bzw. die Position des Ablenkkörpers 74 einstellbar ist.

In dem dargestellten Zustand ist der Ablenkkörper 74 maximal in die Aufbereitungskammer 64 hineingefahren und erstreckt sich über die gesamte Kammerbreite der loopingförmigen Aufbereitungskammer 64. Dies führt dazu, dass das gesamte körnige Material 20 von der Ablenkfläche 76 von dem Auslasspfad und auf den Umlaufpfad abgelenkt wird und kein körniges Material 20 durch die Auslassöffnung 48 aus der Konditioniervorrichtung 32 ausgeleitet wird. Der Ablenkkörper 74 fungiert in der dargestellten Stellung also als Sperreinrichtung, welche die Durchleitung von körnigem Material 20 durch die Konditioniervorrichtung 32 temporär unterbricht.

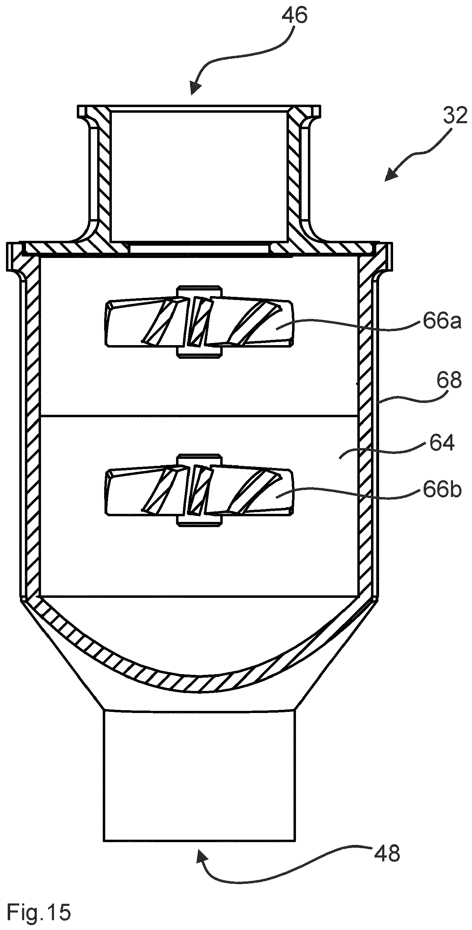

Die Fig. 15 zeigt eine Konditioniervorrichtung 32, bei welcher in der Aufbereitungskammer 64 zwei rotatorisch antreibbare Konditionierorgane 66a, 66b angeordnet sind. Die Konditionierorgane 66a, 66b sind als Schaufelräder ausgebildet und werden durch die mit körnigem Material 20 beladene Luftströmung 24 angetrieben. Die Konditionierorgane 66a, 66b sind dazu eingerichtet, durch eine rotatorische Bewegung die durch die Einlassöffnung 46 einströmende mit körnigem Material 20 beladene Luftströmung 24 durch eine Vergleichmäßigung der Kornverteilung aufzubereiten.

Die Konditionierorgane 66a, 66b sind als Aufbereitungsrotoren ausgebildet, welche derart hintereinander in der Aufbereitungskammer 64 angeordnet sind, dass die Aufbereitungsrotoren 66a, 66b von der mit körnigem Material 20 beladenen Luftströmung 24 axial angeströmt und durchströmt werden.

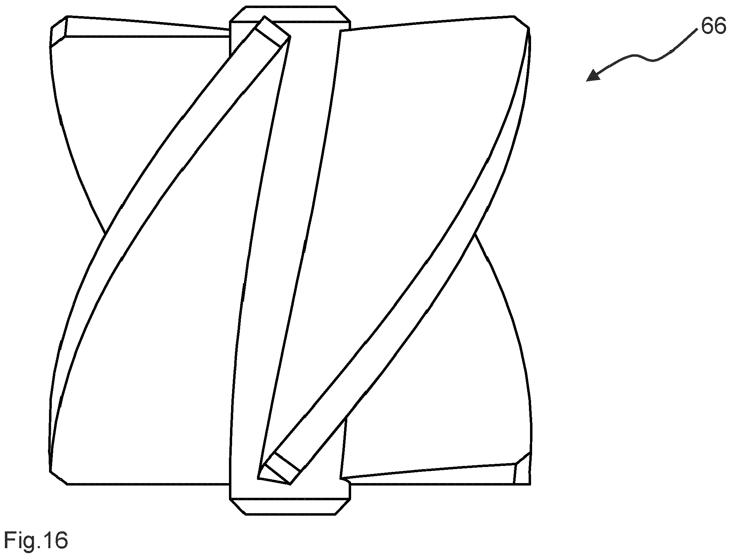

Die Fig. 16 zeigt ein alternatives Konditionierorgan 60, welches als Turbinenrad ausgebildet ist. Das Konditionierorgan 60 kann als Aufbereitungsrotor eingesetzt werden, welcher von der mit körnigem Material 20 beladenen Luftströmung 24 axial angeströmt und/oder durchströmt wird.

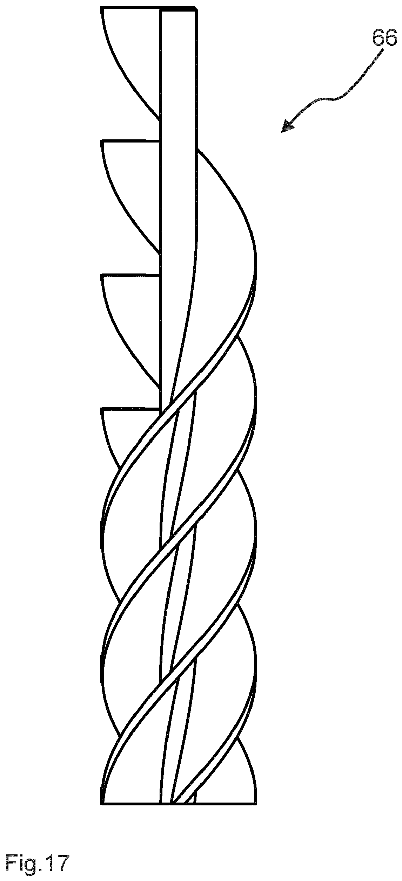

Die Fig. 17 zeigt ein alternatives Konditionierorgan 60, welches als Schraubenrad ausgebildet ist. Das Konditionierorgan 60 kann ebenfalls als Aufbereitungsrotor eingesetzt werden, welcher von der mit körnigem Material 20 beladenen Luftströmung 24 axial angeströmt und/oder durchströmt wird.

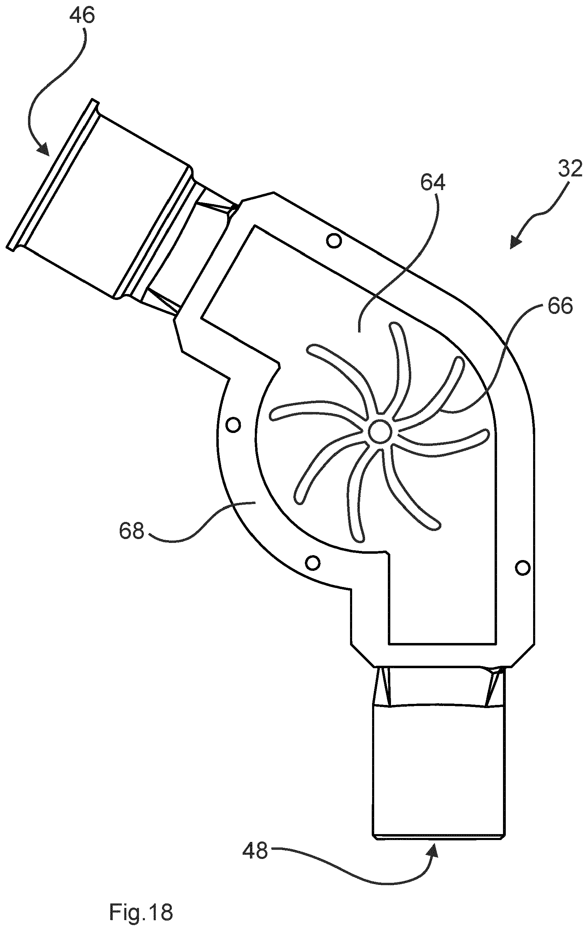

Die Fig. 18 zeigt eine Konditioniervorrichtung 32, bei welcher in der Aufbereitungskammer 64 ein rotatorisch antreibbares Konditionierorgan 66 angeordnet ist. Das Konditionierorgan 66 ist als Radialrotor ausgebildet und dazu eingerichtet, durch die mit körnigem Material 20 beladene Luftströmung 24 in Rotation versetzt zu werden und durch die rotatorische Bewegung die durch die Einlassöffnung 46 einströmende mit körnigem Material 20 beladene Luftströmung 24 durch eine Vergleichmäßigung der Kornverteilung aufzubereiten. Das Konditionierorgan 66 ist ein Aufbereitungsrotor, welcher derart in der Aufbereitungskammer 64 angeordnet ist, dass der Aufbereitungsrotor von der mit körnigem Material 20 beladenen Luftströmung 24 am radial äußeren Umfang angeströmt wird.

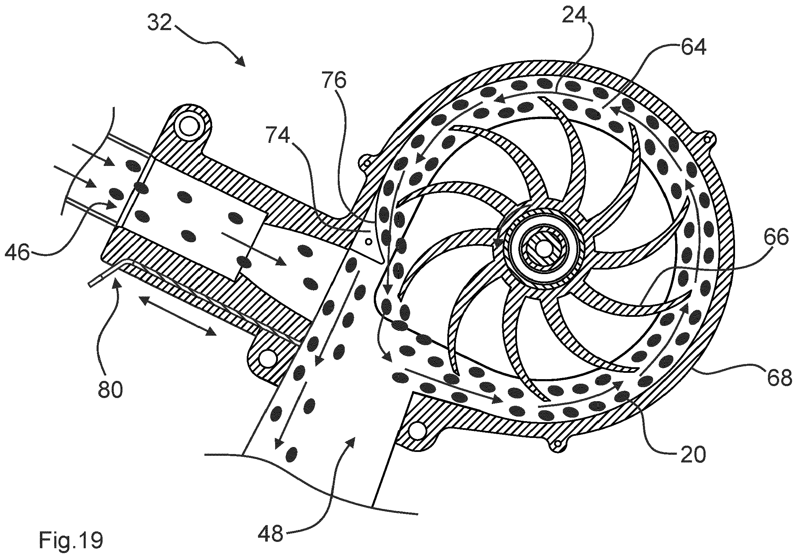

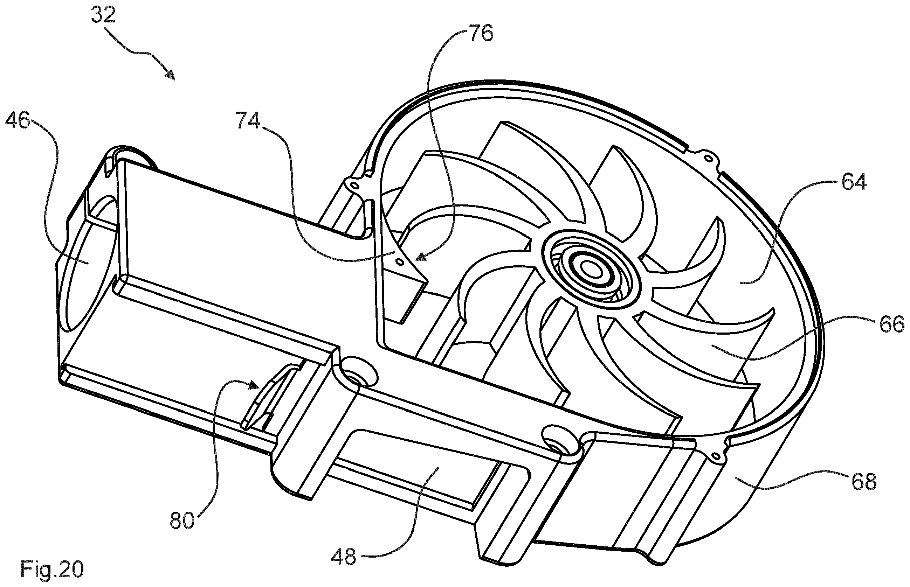

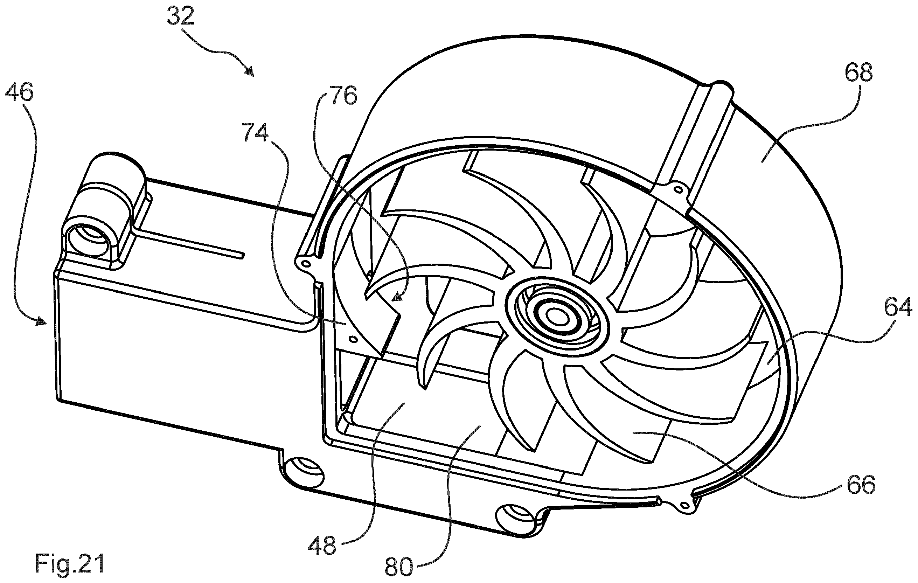

Die Fig. 19 bis 21 zeigen eine Konditioniervorrichtung 32 mit einem von der mit körnigem Material 20 beladenen Luftströmung 24 rotatorisch antreibbaren Konditionierorgan 66 und einem eine Ablenkfläche 76 aufweisenden Ablenkkörper 74.

Durch das Konditionierorgan 66 wird das körnige Material 20 am radial äußeren Rand der Aufbereitungskammer 64 geführt. Der Ablenkkörper 74 und die Ablenkfläche 72 bilden eine Ablenkschanze, über welche körniges Material 20 von einem Auslasspfad auf einen Umlaufpfad abgelenkt wird, sodass eine Ausleitung des abgelenkten körnigen Materials 20 aus der Aufbereitungskammer 64 verzögert wird. Das abgelenkte Material 20 wird erneut in den Umlauf geschickt, sodass sich in der Aufbereitungskammer 64 ein Kornpuffer einstellt.

Der Ablenkkörper 74 samt Ablenkfläche 76 erstrecken sich über einen Teilabschnitt der Kammerbreite der Aufbereitungskammer 64, sodass sich seitlich des Ablenkkörpers 74 ein Bereich befindet, in welchem das körnige Material 20 nicht von der Ablenkfläche 76 abgelenkt wird und die Konditioniervorrichtung 32 durch die Auslassöffnung 48 verlassen kann.

Die Konditioniervorrichtung 32 umfasst ferner eine schaltbare Sperreinrichtung 80 zum temporären Unterbrechen der Durchleitung von körnigem Material 20 durch die Konditioniervorrichtung 32. Durch die Konditioniervorrichtung 32 kann es zu einer Erhöhung Latenzzeit kommen, also einer stärkeren zeitlichen Verzögerung zwischen Abschalten der Körnerzubringung und Ausbringung des letzten Korns. Um diese Latenzzeitsteigerung zu kompensieren, kann die Durchleitung von körnigem Material über die Sperreinrichtung 80 direkt an der Konditioniervorrichtung 32 unterbrochen werden.

Die Sperreinrichtung 80 umfasst einen beweglichen Schieber, mit welchem die Auslassöffnung 48 teilweise oder vollständig verschließbar ist. Die Sperreinrichtung 80 kann mit einem Sperrkörper, beispielsweise einer Klappe, am Verteilerkopf verschaltet sein, so dass die Durchleitung von körnigem Material 20 durch die Konditioniervorrichtung 32 synchron oder in Abhängigkeit der Sperrkörperbewegung am Verteilerkopf unterbrochen werden kann. Der Schieber kann dazu eingerichtet sein, ad hoc zu schließen und langsam wieder zu öffnen, um die Restmenge nicht schwallartig auszubringen.

### Bezugszeichenliste

- 10: Fördersystem
- 12: Strömungserzeuger
- 14, 14a, 14b: Luftströmung
- 16: Dosierer
- 18: Vorratsbehälter
- 20: Material
- 22: Verteileinrichtung
- 24: Luftströmung
- 26: Verteilrotor
- 28: Ausbringleitung
- 30: Materialerfassungseinrichtung
- 32: Konditioniervorrichtung
- 34: Abscheideeinrichtung
- 36: Luftauslass
- 38: Materialablageeinrichtung
- 40: Umlenkeinrichtung
- 42: Materialrückführung
- 44: Strömungsteiler
- 46: Einlassöffnung
- 48: Auslassöffnung
- 50: Spiralführung
- 52: Windung
- 54: Prallelement
- 56: Prallkammer
- 58: Trennkante
- 60: Direktpfad
- 62: Umlaufpfad
- 64: Aufbereitungskammer
- 66, 66a, 66b: Konditionierorgane
- 68: Gehäuse
- 70: Kreuzungsbereich
- 72: Abführöffnung
- 74: Ablenkkörper
- 76: Ablenkfläche
- 78: Einsatz
- 80: Sperreinrichtung

- N: Nutzfläche

## Patentansprüche

1. Stromlos betreibbare Konditioniervorrichtung (32) für ein pneumatisches Fördersystem (10) einer landwirtschaftlichen Ausbringmaschine, mit
- einer Einlassöffnung (46), über welche eine mit körnigem Material (20) beladene Luftströmung (24) in die Konditioniervorrichtung (32) einleitbar ist;
**gekennzeichnet durch**
- eine mit der Einlassöffnung (46) verbundene Aufbereitungskammer (64) zum Aufbereiten der durch die Einlassöffnung (46) einströmenden mit körnigem Material (20) beladenen Luftströmung (24); und
- eine mit der Aufbereitungskammer (64) verbundene Auslassöffnung (48), über welche die in der Aufbereitungskammer (64) aufbereitete mit körnigem Material (20) beladene Luftströmung (24) aus der Konditioniervorrichtung (32) ausleitbar ist.

2. Konditioniervorrichtung (32) nach Anspruch 1,
**dadurch gekennzeichnet, dass** in der Aufbereitungskammer (64) ein rotatorisch oder translatorisch antreibbares Konditionierorgan (66, 66a, 66b) angeordnet ist, welches dazu eingerichtet ist, durch eine rotatorische oder translatorische Bewegung die durch die Einlassöffnung (46) einströmende mit körnigem Material (20) beladene Luftströmung (24) aufzubereiten.

3. Konditioniervorrichtung (32) nach Anspruch 2,
**dadurch gekennzeichnet, dass** das Konditionierorgan (66, 66a, 66b) als Aufbereitungsrotor ausgebildet ist, welcher derart in der Aufbereitungskammer (64) angeordnet ist, dass der Aufbereitungsrotor von der mit körnigem Material (20) beladenen Luftströmung (24) am radial äußeren Umfang angeströmt wird.

4. Konditioniervorrichtung (32) nach Anspruch 2,
**dadurch gekennzeichnet, dass** das Konditionierorgan (66, 66a, 66b) als Aufbereitungsrotor ausgebildet ist, welcher derart in der Aufbereitungskammer (64) angeordnet ist, dass der Aufbereitungsrotor von der mit körnigem Material (20) beladenen Luftströmung (24) axial angeströmt und/oder durchströmt wird.

5. Konditioniervorrichtung (32) nach Anspruch 1,
**dadurch gekennzeichnet, dass** sich in der Aufbereitungskammer (64) keine beweglichen Teile für die Aufbereitung der mit körnigem Material beladenen Luftströmung befinden.

6. Konditioniervorrichtung (32) nach einem der vorstehenden Ansprüche,
**dadurch gekennzeichnet, dass** die Aufbereitungskammer (64) dazu eingerichtet ist, die mit körnigem Material (20) beladene Luftströmung (24) derart in der Aufbereitungskammer (64) zu führen, dass ein Pufferanteil des in die Aufbereitungskammer (64) einströmenden körnigen Materials (20) länger in der Aufbereitungskammer (64) verbleibt als ein Ausleitungsanteil des in die Aufbereitungskammer (64) einströmenden körnigen Materials (20).

7. Konditioniervorrichtung (32) nach einem der vorstehenden Ansprüche,
**dadurch gekennzeichnet, dass** in der Aufbereitungskammer (64) eine Ablenkfläche (76) angeordnet ist, welche dazu eingerichtet ist, das sich in der Aufbereitungskammer (64) befindende körnige Material von einem Auslasspfad und/oder auf einen Umlaufpfad abzulenken, sodass eine Ausleitung des abgelenkten körnigen Materials aus der Aufbereitungskammer (64) verzögert wird.

8. Konditioniervorrichtung (32) nach einem der vorstehenden Ansprüche,
**dadurch gekennzeichnet, dass** die Aufbereitungskammer (64) und/oder das Konditionierorgan (66, 66a, 66b) dazu eingerichtet ist,
- mit der Luftströmung (24) transportierte Körner zur vereinzelten Ablage auf einer landwirtschaftlichen Nutzfläche (N) zu vereinzeln; oder
- die Verteilung des mit der Luftströmung (24) transportierten körnigen Materials (20) zu vergleichmäßigen.

9. Konditioniervorrichtung (32) nach einem der vorstehenden Ansprüche, **gekennzeichnet durch** eine schaltbare Sperreinrichtung (80) zum temporären Unterbrechen der Durchleitung von körnigem Material durch die Konditioniervorrichtung (32), wobei die Sperreinrichtung (80) vorzugsweise dazu eingerichtet ist abrupt zu unterbrechen und/oder zu öffnen und/oder sukzessive zu unterbrechen und/oder zu öffnen.

10. Pneumatisches Fördersystem (10) für eine landwirtschaftliche Ausbringmaschine, mit
- einem Strömungserzeuger (12), welcher dazu eingerichtet ist, eine Luftströmung (14) zu erzeugen; und
- zumindest einer Ausbringleitung (28), welche dazu eingerichtet ist, eine mit körnigem Material (20) beladene Luftströmung (24) zu einer Materialablageeinrichtung (38) der landwirtschaftlichen Ausbringmaschine zu führen; und
- eine Konditioniervorrichtung (32), welche dazu eingerichtet ist, die durch die Ausbringleitung (28) strömende und mit körnigem Material (20) beladene Luftströmung (24) aufzubereiten;
**dadurch gekennzeichnet, dass** die Konditioniervorrichtung (32) nach einem der vorstehenden Ansprüche ausgebildet ist.

11. Fördersystem (10) nach Anspruch 10,
**gekennzeichnet durch** eine Abscheideeinrichtung (34), mittels welcher ein Teil der Luft aus der in der Ausbringleitung (28) geführten und mit körnigem Material (20) beladenen Luftströmung (24) abscheidbar ist.

12. Fördersystem (10) nach Anspruch 11,
**gekennzeichnet durch**
- einen Luftauslass (36), über welchen die durch die Abscheideeinrichtung (34) abgeschiedene Luft in die Umgebung ausleitbar ist; oder
- durch eine Rückführeinrichtung, über welche die durch die Abscheideeinrichtung (34) abgeschiedene Luft, insbesondere nach der Verwendung zum Antrieb der Konditioniervorrichtung (32), wieder in die mit körnigem Material (20) beladene Luftströmung (24) zurückführbar ist.

13. Fördersystem (10) nach einem der Ansprüche 10 bis 12,
**dadurch gekennzeichnet, dass** der Strömungserzeuger (12) dazu eingerichtet ist, die Luftströmung (14, 24) zum Transport des körnigen Materials (20) zu erzeugen, wobei die Ausbringleitung (28) dazu eingerichtet ist, die von dem Strömungserzeuger (12) erzeugte und mit körnigem Material (20) beladene Luftströmung (24) zu einer Materialablageeinrichtung (38) der landwirtschaftlichen Ausbringmaschine zu führen.

14. Fördersystem (10) nach Anspruch 13,
**gekennzeichnet durch** einen Strömungsteiler (44), welcher dazu eingerichtet ist, die von dem Strömungserzeuger (12) erzeugte Luftströmung (14) in eine erste Luftströmung (14a) zum Transport des körnigen Materials (20) und eine zweite Luftströmung (14b) zum Antreiben der Konditioniervorrichtung (32) zu teilen.

15. Fördersystem (10) nach einem der Ansprüche 10 bis 14,
**gekennzeichnet durch** eine Materialerfassungseinrichtung (30), welche dazu eingerichtet ist, dass durch die Ausbringleitung (28) geförderte Material (20) zu erfassen, wobei das Fördersystem (10) vorzugsweise zumindest eine Steuerungseinrichtung umfasst, welche dazu eingerichtet ist, eine Materialverteilung in einer Verteileinrichtung (22) des Fördersystem (10) und/oder die Konditioniervorrichtung (32) in Abhängigkeit der Materialerfassung der Materialerfassungseinrichtung (30) zu steuern.

16. Fördersystem (10) nach einem der Ansprüche 10 bis 15, **gekennzeichnet durch** eine, vorzugsweise als Verteilerkopf ausgeführte, Verteileinrichtung (22) mit einem Sperrkörper zum Unterbrechen der Einleitung von Material, wobei die Sperreinrichtung (80) und/oder die Ablenkfläche (76) der Konditioniervorrichtung (32) synchron oder in Abhängigkeit der Sperrkörperbewegung geschaltet ist.
